# EUROPEAN PATENT SPECIFICATION

(11) **EP 3 966 173 B1**
(45) Date of publication and mention of the grant of the patent: **20.12.2023**
(21) Application number: 20730108.6
(22) Date of filing: 08.05.2020
(51) Int. Cl.: C03C 3/066, C03C 4/00, C03C 12/00, C05B 17/00, C05B 7/00, C03C 14/00

(54) **FERTILIZING COMPOSITION COMPRISING A GLASS MATRIX**
DÜNGEMITTELZUSAMMENSETZUNG MIT EINER GLASMATRIX
COMPOSITION FERTILISANTE COMPRENANT UNE MATRICE DE VERRE

(30) Priority: 09.05.2019 IT 201900006663
(43) Date of publication of application: 16.03.2022
(73) Proprietor: MPD S.r.l., 50132 Firenze (IT)
(72) Inventor: BALDI, Giovanni, 50056 Montelupo Fiorentino (Firenze) (IT); NICCOLAI, Laura, 50056 Montelupo Fiorentino (Firenze) (IT); RESTA, Emilio, 55010 Capannori Localita' Gragnano (Lucca) (IT); MICCINESI, Marco, 50137 Firenze (IT)
(74) Representative: Biggi, Cristina
(86) International application number: PCT/IB2020/054369
(87) International publication number: WO 2020/225784

(56) References cited:
- GB-A- 756 332
- JP-A- H06 122 584
- B. Samuneva ET AL: "Borate agriglasses: synthesis and application", Glass Tech, 1 December 2000 (2000-12-01), pages 206-208, XP055657606, Retrieved from the Internet: URL:http://docserver.ingentaconnect.com/de liver/connect/sgt/00171050/v41n6/s11.pdf?e xpires=1579163352&id=0000&titleid=6339&che cksum=D773358E3F334ABD505AE54C772FC2D6 [retrieved on 2020-01-14]
- AZOOZ M A ET AL: "Preparation and application of some phosphoborosilicate glasses containing micronutrients as plant fertilisers", GLASS TECHNOLOGY: EUROPEAN JOURNAL OF GLASS SCIENCE AND TECHNOLOGY PART A,, vol. 47, no. 6, 1 December 2006 (2006-12-01), pages 164-171, XP001516570, ISSN: 1753-3546
- MONA A. OUIS ET AL: "Evaluation of the Suitability of Agriglasses Containing ZnO for Plant Fertilization", SILICON, vol. 4, no. 1, 18 December 2010 (2010-12-18), pages 61-71, XP055657598, Dordrecht ISSN: 1876-990X, DOI: 10.1007/s12633-010-9060-9

## Description

### Technical field

The present invention relates to fertilizers, and in particular to a fertilizing composition comprising a glass matrix, an aggregate comprising said fertilizing composition and the use thereof to fertilize herbaceous and/or arboreal crops.

### Prior art

In the past 70 years, we have witnessed a veritable explosion in agricultural productivity thanks to the development and market availability of better and better performing machinery, plant protection products and fertilizers. At the same time, the continuous growth of global food requirements, the need to keep food prices low, the reduction in the croppable surface area, and the need to grow crops even in clearly unfavourable zones and to be able to obtain products of high nutritional quality has led not only industrialized countries but developing ones as well towards the use of increasingly intensive farming.

As regards fertilizers, these are used for the purpose of imparting to soil one or more nutrient elements that can be used by herbaceous and/or arboreal crops (such as, for example, nitrogen, phosphorous, potassium, calcium, sulphur, magnesium, iron, manganese, zinc, boron, copper, molybdenum, cobalt, etc.), thus creating, reconstituting, preserving or increasing soil fertility. As is well known, nutrient elements are generally distinguished into three categories based on the response to their absorption by crops:
- macroelements (or main fertility elements), such as, for example, nitrogen, phosphorous and potassium, which are absorbed by the crops in large quantities;
- mesoelements (or secondary fertility elements), such as, for example, calcium, magnesium and sulphur, which are absorbed by the crops in medium quantities; and
- microelements (also called trace elements), such as, for example, iron, manganese, zinc, copper and cobalt, generally administered in metallic form, or boron and molybdenum, generally administered in anionic form, which are absorbed by the crops in minimal quantities, but are nonetheless essential for their growth.

One of the main problems in the sector of fertilizers, in particular fertilizers based on chemical products, lies in the risk of pollution, particularly of underground aquifers, deriving from the leaching of potentially harmful elements contained in them, which are generally highly water soluble, as in the case, for example, of inorganic nitrogen salts, or transported passively due to soil erosion, as in the case of inorganic phosphorous salts.

The run-off of substances contained in conventional fertilizing products can lead to the impossibility of using groundwater for drinking purposes or even the alteration or impairment of biodiversity. In the case of phosphorous-based compounds, a further risk is linked to the eutrophication of inland water or seawater, with considerable damage for the ecosystems tied to them.

Even more serious from an environmental viewpoint, however, are the consequences that can be caused by the dispersion of chelated fertilizing substances on the soil.

In fact, up to now the main strategy adopted by fertilizer manufacturers to ensure crop intake of nutrient elements, in particular metal microelements, is based on supplying such "micronutrients" in the form of chelate compounds with synthetic molecules.

Chelates are water-soluble products that have a high efficiency in terms of releasing nutrients and making them available to plants and since the 1960s they have represented a turning point in the chemical fertilization of soils. However, the use of the aforesaid chelate compounds has numerous disadvantages, above all the limited duration of their effectiveness. A chelate compound can in fact preserve its chelating action vis-à-vis a metal for a relatively brief period of time after it was spread in the soil. This makes it necessary to repeat the fertilization procedure, with an increase in both economic and environmental costs. Another major disadvantage regards, in this case as well, the risk of pollution due to the leaching of such products from the soil to water. This type of pollution, caused both by chelated products and free chelating agents, can in fact be more difficult to combat than the other types of pollution mentioned above because it can give rise to reactions that are still little known and can generate forms of environmental alteration for a longer period.

In particular, a chelating agent can become unbound from the nutrient element it is desired to supply to the plant and, not being rapidly degraded in the environment, bind even more selectively to other metals, for example heavy metals such as cadmium, nickel, chrome or lead, present in the soil or in aquifer sediments, rendering them mobile and thus giving rise in this case as well to risks of groundwater pollution.

At present, in order to try to avoid or in any case limit the pollution risks listed above, various solutions have been adopted, the most common of which consist in administering reduced amounts of the above-mentioned nutrient elements more frequently and gradually or products that assure a slower release of the same elements in the soil. Among these, fertilizers based on glass matrices are known in the sector. They are fertilizers that enable primarily phosphorous and potassium, secondarily calcium, sodium and magnesium, and, finally, various microelements, such as copper, iron, zinc, etc. to be released into the soil or crop substrate. These fertilizing products have an amorphous structure consisting of a glass matrix in which the various above-mentioned elements are dispersed and bound, and they can be prepared with processes borrowed from glassmaking technology, that is, by melting mixtures of precursors of the aforesaid elements (oxides, salts and/or minerals) followed by cooling of the molten mass and subsequent granulation or grinding. Because of their glass structure and water insolubility, these types of fertilizing compositions fall into the category of so-called controlled-release fertilizers, as they assure a slower release of the elements into the ground and less or even no leaching compared to conventional fertilizers or chelates.

The characteristic water insolubility of these products thus makes them particularly appreciated from an environmental viewpoint, since their use on the ground has no effect other than the release of nutrient substances for active absorption by the roots of herbaceous and/or arboreal crops. In other words, fertilizers with a glass matrix do not have the side effects of traditional fertilizers, which have a strong impact on the environment, in particular in terms of pollution of underground aquifers, which has negative consequences on the possibility of using the water and the risk of affecting biodiversity.

Therefore, fertilizers with a glass matrix represent an excellent alternative to traditional fertilizers and chelated fertilizers from the standpoint of environmental impact; however, at present, they are made in such a way as to release the nutrient elements into the soil and to the herbaceous and/or arboreal crops according to a predetermined model that is imposed on the product at the time of production, but does not necessarily meet the requirements of the crop, which may vary according to its state of development, the momentary conditions of the soil, etc. Furthermore, many of these products have often revealed to be incapable of making the microelements contained in them available within a reasonable time and in an effective amount.

The difficulty related to the preparation of a product with a glass matrix that has an acceptable ability to release meso- and microelements and is useful to the plant, i.e. which can be modulated on demand based on its real needs, is a technical problem which, to date, persists in the sector.

In order to overcome this problem, it has been proposed to produce fertilizing compositions with a glass matrix comprising an association of forming oxides, modifying oxides and inorganic meso- and microelements in predetermined specific percentage amounts.

For example, patent application WO2007132497 describes a fertilizing composition with a glass matrix having a percentage composition by weight of phosphorous (expressed as P₂O₅) in the range of 2-45%, potassium (expressed as K₂O) in the range of 2-45%, other mesoelements (calcium, magnesium, sulphur and optionally sodium) and microelements (zinc, iron, boron, manganese, cobalt, copper, molybdenum); whereas patent application WO2016132285 discloses a fertilizing composition, likewise with a glass matrix, used as a trivalent chromium supplement for plants, mainly consisting of phosphoric anhydride P₂O₅ as a partial replacement of silica (i.e. having a percentage composition by weight of phosphorous in the range of 26-36%), modifier oxides of this anhydride, such as, for example, K₂O and CaO (i.e. having a percentage composition by weight of potassium and calcium in the range of 14-24% and 5-15%, respectively), and microelements, including, in particular, trivalent chromium. Further fertilizing compositions with a glass matrix are disclosed in B. Samuneva et al.: "Borate agriglasses: synthesis and application",Glass Tech, 1 December 2000 (2000-12-01), pages 206-208.

However, such fertilizing compositions with a glass matrix do not offer an optimal solution to the technical problems of the sector and, in particular, they appear incapable of making the nutrient elements, especially the microelements, contained in them available according to the needs of the plant. In particular, said fertilizing compositions with a glass matrix release the microelements contained in them too slowly and only to a modest extent when demanded by the crops.

Thus, there remains a need in the sector to provide a fertilizing composition with a glass matrix that enables the necessary nutrients (in particular the microelements) to be supplied to the various herbaceous and/or arboreal crops and which is at the same time a product with a limited risk of environmental impact.

The present invention solves the above-mentioned problems by providing a fertilizing composition that enables nutrients, in particular micronutrients, to be released in a controlled manner over a prolonged period of time and according to the needs of the herbaceous and/or arboreal crops, while simultaneously avoiding risks of environmental contamination and permitting a partial or even total replacement of traditional fertilizers or chelates.

### Object of the invention

The present invention relates to a fertilizing composition comprising a glass matrix, wherein said glass matrix comprises:
- at least three forming oxides, wherein said at least three forming oxides are SiO₂, P₂O₅ and B₂O₃, and have a ratio by weight between SiO₂/P₂O₅ comprised from 1 to 5, preferably from 2.5 to 3.5 and a ratio by weight between SiO₂/B₂O₃ comprised from 15 to 25 preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, and
- at least one microelement selected from: iron, zinc, copper, manganese, cobalt, molybdenum and combinations thereof.

Said fertilizing composition can optionally also comprise citric acid and/or at least one humic substance.

The subject matter of the present invention further relates to an aggregate comprising said fertilizing composition and at least one thickening agent. Said aggregate can optionally further comprise at least one microelement that is identical to or different from the at least one microelement present within the glass matrix of the fertilizing composition.

The present invention also relates to a method for fertilizing herbaceous and/or arboreal crops, comprising the steps of:
(i) providing said fertilizing composition comprising a glass matrix;
(ii) grinding the composition of step (i), optionally adding citric acid and/or at least one humic substance;
(iii) administering the composition of step (ii) to the crops, optionally in the form of an aggregate obtained by mixing the fertilizing composition with at least one thickening agent (and optionally a microelement) and subjecting the mixture to forming.

The present invention regards, finally, the use of the fertilizing composition or of the aggregate comprising said composition to fertilize herbaceous and/or arboreal crops.

### Brief description of the drawings

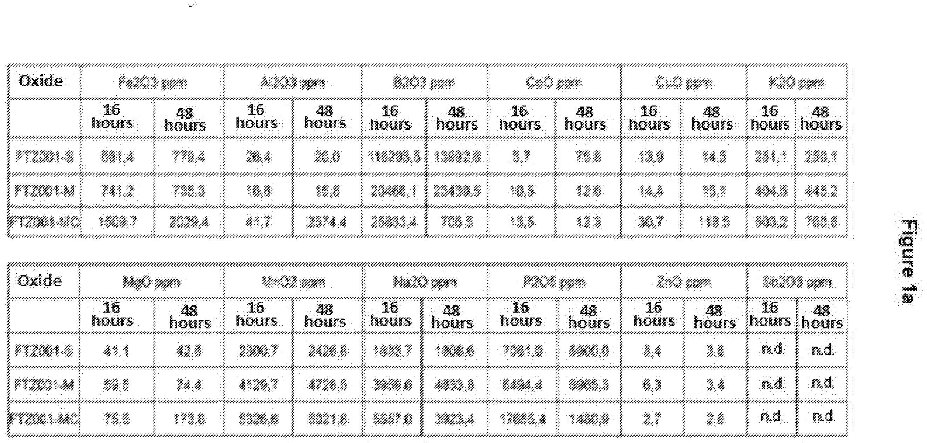

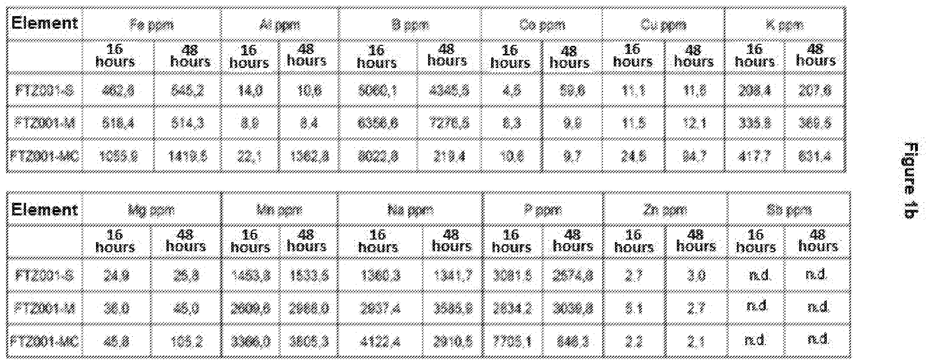

Figures 1a and 1b show the results of the RHIZO release test described in Example 4 for the three compositions of the present invention, "FTZ001-M", "FTZ001-MC" and "FTZ001-PC", obtained as per Examples 1, 2 and 2.1. In particular, Figure 1a shows the values expressed as ppm of the oxide, after 16 and 48 hours, while Figure 1b shows the same results expressed as ppm of the element.

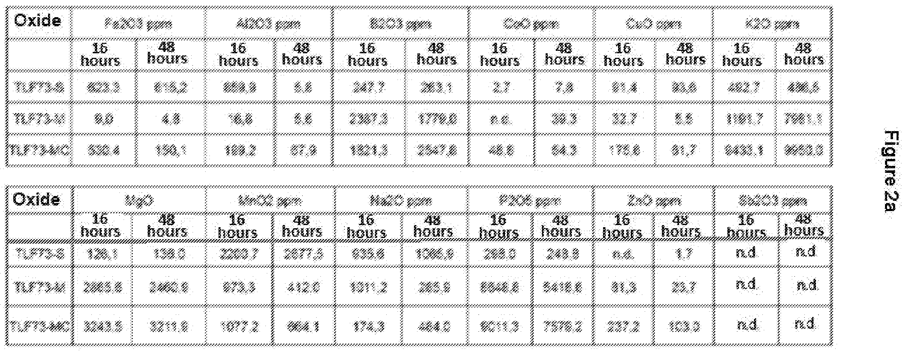

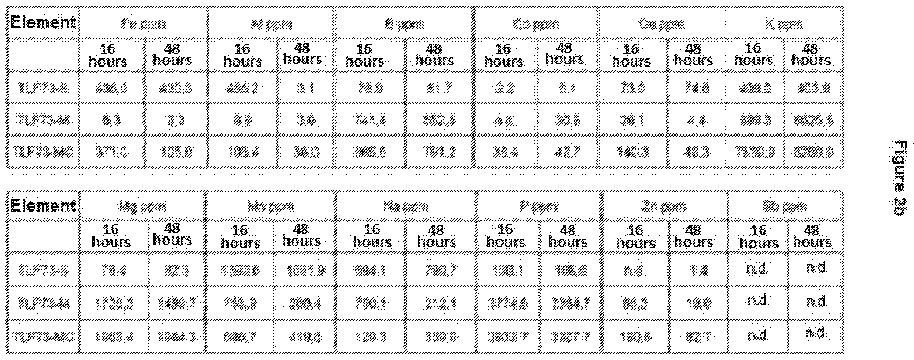

Figures 2a and 2b show the results of the RHIZO release test for three "prior art" compositions, "TLF73-S", "TLF73-M" and "TLF73-MC" described in Example 5. In particular, Figure 2a shows the values expressed as ppm of the oxide, after 16 and 48 hours, while Figure 2b shows the same results expressed as ppm of the element.

### Detailed description of preferred embodiments of the invention

The term "forming oxide" (or vitrifying oxide) means an oxide of a chemical element capable of inducing the formation of the stable glass network. The term "modifying oxide" (also defined as fusing if alkaline or stabilizing if alkaline-earth) means an oxide of a chemical element capable of modifying the glass network, rendering it more or less stable depending on the temperature and the physicochemical conditions of the outside environment and/or decreasing its viscosity and enabling processing at lower temperatures.

The term "intermediary oxide" means an oxide of a chemical element capable of forming a network only if in the presence of other forming oxides.

The term "stabilizing oxide" means an oxide of a chemical element capable of modifying the network and rendering it more stable.

The term "nutrient" or "nutrient element" means all the chemical elements that are essential and/or useful for the correct growth and adequate maintenance of the metabolism of a herbaceous and/or arboreal crop. In particular, a nutrient is said to be essential if its absence does not allow the crop to complete its vegetative cycle, causing abnormal growth or premature death, if its specific functions cannot be replaced by any other element and if it performs a unique and direct role in the plant's metabolism. A nutrient is instead defined as useful if it can compensate for the toxic effects of other elements and/or replace an essential nutrient in some non-specific metabolic functions.

For the purposes of the present invention, said nutrients are divided into macronutrients, mesonutrients and micronutrients depending on the amounts absorbed/absorbable by the crop (and calculated as mg of macro-, meso- or microelement per kilogram of dry matter).

For the purposes of the present invention, the terms "macronutrient" or "macroelement" are thus used as perfectly interchangeable synonyms and they refer to a chemical element, preferably selected in the group consisting of: C, H, O, N, P, S, Ca, K, Mg, which is absorbed by the herbaceous and/or arboreal crops generally in the form of an anion or cation and is present in a concentration greater than 1000 mg/kg.

The terms "mesonutrient" or "mesoelement" are used as perfectly interchangeable synonyms and they refer to a chemical element, preferably selected in the group consisting of: Ca, Mg, Na, S, Cl, which is absorbed by the herbaceous and/or arboreal crops generally in the form of a cation or anion, and is present in a concentration comprised from 100 mg/kg to 1000 mg/kg.

The terms "micronutrient" or "microelement" are used as perfectly interchangeable synonyms and they refer to a chemical element, preferably selected in the group consisting of: Fe, Mn, Zn, Cu, B, Co, Si, Ni and Mo, which is absorbed by the herbaceous and/or arboreal crops generally in the form of an anion or cation, and is present in a concentration of less than 100 mg/kg.

The term "humic substance" does not refer to a single substance, but rather to a mixture comprising several substances selected in the group consisting of: humins, humic acids, fulvic acids and combinations thereof. The term "humic acids" refers to a complex mixture of acids containing carboxylic and phenolic groups, which behaves like a diprotic or triprotic acid.

It appears clear that, for the purposes of the present invention, various elements can also be classified in two different classes, as they can be considered, for example, macro- or mesoelements depending on the type of crop. For example, calcium, depending on the type of crop by which it is absorbed can be considered a macroelement or a mesoelement.

For the purposes of the present invention, said macroelements, mesoelements and microelements can be present within the fertilizing composition, or the aggregate comprising said fertilizing composition, in the form of salts, oxides or any other chemical compound comprising the element of interest.

The term "iron oxide", for the purposes of the present invention, indicates all the chemical compounds formed by iron (in the different states of oxidation thereof) and oxygen selected in the group consisting of: FeO, Fe₃O₄ and Fe₂O₃.

The term "copper oxide" refers indistinctly and interchangeably to cuprous oxide (Cu₂O) and cupric oxide (CuO).

The term "manganese oxide" indicates all the chemical compounds formed by manganese (in the different states of oxidation thereof) and oxygen selected in the group consisting of: MnO, Mn₂O₃, MnO₂, MnO₃, Mn₂O₇ and Mn₃O₄.

The term "cobalt oxide" indicates all the chemical compounds formed by cobalt (in the different states of oxidation thereof) and oxygen selected in the group consisting of: CoO, Co₂O₃ and Co₃O₄ (spinel).

The term "molybdenum oxide" refers indistinctly and interchangeably to both molybdenum dioxide (MoO₂) and molybdenum trioxide (MoOs).

The term "pellet" refers to a granule resulting from a pelletization process, i.e. a process of transformation of powdery materials (i.e. in powder form) into granular agglomerates in an oval, rhombus, cube, parallelepiped or cylinder shape or other specific shapes depending on needs, in particular flowability and handling needs.

The present invention relates to a fertilizing composition comprising a glass matrix, said glass matrix comprising:
- at least three forming oxides, wherein said at least three forming oxides are SiO₂, P₂O₅ and B₂O₃, and have a ratio by weight between SiO₂/P₂O₅ comprised from 1 to 5, preferably from 2.5 to 3.5 and a ratio by weight between SiO₂/B₂O₃ comprised from 15 to 25 preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, and
- at least one microelement selected from: iron, zinc, copper, manganese, cobalt, molybdenum and combinations thereof.

Said at least one microelement is present within said glass matrix in the form of an oxide. This means that the glass matrix comprises at least one oxide of said microelement, said oxide being selected from: iron oxide, zinc oxide, copper oxide, manganese oxide, cobalt oxide, molybdenum oxide and mixtures thereof.

In the invention, the ratio by weight between SiO₂/B₂O₃ is comprised from 15 to 25, preferably from 20 to 25, more preferably from 20 to 23.

In a preferred embodiment, the ratio by weight between SiO₂/P₂O₅ is comprised from 2.5 to 3.5 and the ratio by weight between SiO₂/B₂O₃ is comprised from 20 to 23.

The forming oxide SiO₂ is preferably present in the glass matrix in an amount comprised from 10 to 30% by weight, preferably from 20 to 30%, even more preferably from 23 to 27% by weight, relative to the total weight of the glass matrix.

The forming oxide P₂O₅ is preferably present in the glass matrix in an amount comprised from 5 to 20% by weight, preferably from 6 to 15%, even more preferably from 7 to 10% by weight, relative to the total weight of the glass matrix.

The forming oxide B₂O₃ is preferably present in the glass matrix in an amount comprised from 0.5 to 5% by weight, preferably from 0.9 to 1.3% by weight, relative to the total weight of the glass matrix.

The at least one microelement is preferably present in the glass matrix in an amount greater than 1% by weight, preferably comprised from 10 to 40% by weight, even more preferably from 10 to 30 % by weight, relative to the total weight of the glass matrix.

Said at least one microelement being present within said glass matrix in the form of an oxide, the percentage amount by weight refers to the oxide of said microelement.

In one embodiment of the invention, the glass matrix further comprises:
- at least one modifying oxide selected from among Na₂O, K₂O, Li₂O and combinations thereof,
- and/or at least one intermediary oxide selected from among Al₂O₃, TiO₂, ZrO₂ and combinations thereof,
- and/or at least one stabilizing oxide selected from among BaO, CaO, MgO, TiO₂, ZrO₂ and ZnO and combinations thereof.

Said at least one modifying oxide is preferably present in the glass matrix in an amount comprised from 0.5 to 40% by weight, preferably from 10 to 30% by weight, relative to the total weight of the glass matrix.

Said at least one intermediary oxide is preferably present in the glass matrix in an amount comprised from 5 to 20 % by weight, preferably from 10 to 15% by weight, relative to the total weight of the glass matrix.

Said at least one stabilizing oxide is preferably present in the glass matrix in an amount comprised from 1 to 20 % by weight, preferably from 10 to 20 % by weight, relative to the total weight of the glass matrix.

In one embodiment of the invention, the glass matrix comprises:
- at least two modifying oxides selected from among Na₂O, K₂O, Li₂O and combinations thereof;
- and/or at least two intermediary oxides selected from among Al₂O₃, TiO₂, ZrO₂ and combinations thereof,
- and/or at least two stabilizing oxides selected from among BaO, CaO, MgO, TiO₂, ZrO₂ and ZnO and combinations thereof.

Said at least two modifying oxides are preferably present in the glass matrix in a total amount, referring to the sum of the oxides, comprised from 0.5 to 40% by weight, preferably from 10 to 30% by weight, relative to the total weight of the glass matrix.

Said at least two intermediary oxides are preferably present in the glass matrix in a total amount, referring to the sum of the oxides, comprised from 5 to 20 % by weight, preferably from 10 to15% by weight, relative to the total weight of the glass matrix.

Said at least two stabilizing oxides are preferably present in the glass matrix in a total amount, referring to the sum of the oxides, comprised from 1 to 20 % by weight, preferably from 10 to 20 % by weight, relative to the total weight of the glass matrix.

In a preferred embodiment of the invention, the glass matrix comprises the following oxides:
- Na₂O, K₂O and Li₂O as modifying oxides,
- and/or Al₂O₃, TiO₂, ZrO₂ as intermediary oxides,
- and/or BaO, CaO, MgO, TiO₂, ZrO₂, ZnO as stabilizing oxides.

Analogously to what was described above, said modifying and/or intermediary and/or stabilizing oxides are preferably present in the glass matrix in the amounts as defined above.

In a particularly preferred embodiment of the invention, the glass matrix comprises the following oxides:
- Na₂O and K₂O as modifying oxides,
- Al₂O₃, TiO₂ and ZrO₂ as intermediary oxides, and
- BaO, CaO, MgO, TiO₂, ZrO₂ and ZnO as stabilizing oxides

Analogously to what was described above, said modifying, intermediary and stabilizing oxides are preferably present in the glass matrix in the amounts as defined above.

In one embodiment, the fertilizing composition consists of a glass matrix as defined above.

The glass matrix of the composition of the invention comprises within it the nutrients necessary for performing fertilizer activity and possesses adequate release characteristics, intrinsically deriving respectively from the chemical composition in oxides of the structure thereof and the particular weight ratio between the forming oxides comprised therein.

In particular, the nutrient elements present within the glass matrix can "derive" both from the microelements explicitly listed as described above (iron, zinc, copper, manganese, cobalt and molybdenum, present within the glass matrix in the form of iron oxide, zinc oxide, copper oxide, manganese oxide, cobalt oxide and molybdenum oxide) and from the forming oxides SiO₂, P₂O₅ and B₂O₃ themselves.

It thus appears that, for the purposes of the present invention, an oxide present within the glass matrix can perform two different functions at the same time, i.e. it can simultaneously be a network forming oxide and a meso- or micronutrient for the herbaceous and/or arboreal crops. This is so, for example, in the case of boron, present in the glass matrix as B₂O₃, which is simultaneously a network forming oxide and a micronutrient for the crops.

The same also applies for the modifying, intermediary and stabilizing oxides optionally present within the glass matrix of the fertilizing composition according to the present invention. For example, magnesium, optionally present in the glass matrix as magnesium oxide, performs the dual function of a network stabilizing oxide and a mesonutrient for the crops.

It thus appears that, for the purposes of the present invention, the various forming, modifying, intermediary and stabilizing oxides can simultaneously also be considered as nutrients (in particular macro-, meso- or micronutrients depending on the type of chemical element making it up). With regard to the release characteristics of the aforesaid nutrient elements, these are closely correlated to the ratio by weight between the at least three forming oxides SiO₂, P₂O₅ and B₂O₃ present within the glass matrix. Without wishing to be bound to a specific theory, the Applicant has in fact found that a ratio by weight between SiO₂/P₂O₅ comprised from 1 to 5, preferably from 2.5 to 3.5 and a ratio by weight between SiO₂/B₂O₃ comprised from 15 to 25, preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, enables a silica-based glass to be obtained whose network appears to possess stability characteristics that are optimal for the purposes of the present invention. In particular, the glass structure of the aforesaid matrix appears to be neither excessively stable (and thus suitable for assuring an appropriate release of the nutrient elements contained within it) nor excessively destabilized (and thus easily obtainable with common glassmaking techniques).

The aforesaid advantages are evident for fertilizing compositions wherein the ratio by weight between SiO₂/B₂O₃ is comprised from 15 to 25, more preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23.

With regard to the process for producing the fertilizing composition comprising a glass matrix as defined above, it comprises the steps of:
(a) mixing a plurality of precursors of the chemical compounds comprised in the glass matrix, thereby obtaining a mixture of precursors, said precursors being in the form of a powder or of aggregates;
(b) melting the mixture of precursors of step (a) to a temperature comprised from 1100 to 1600 °C, preferably from 1400 to 1500 °C, thereby obtaining a molten mixture;
(c) cooling the molten mixture of step (b), thereby obtaining the glass matrix.

Said mixture of precursors comprises precursors of the at least three glass matrix forming oxides SiO₂, P₂O₅ and B₂O₃ and precursors of the at least one microelement.

Said at least one microelement is present within said glass matrix in the form of an oxide. This means that the glass matrix comprises at least one oxide of said microelement, said oxide being selected from: iron oxide, zinc oxide, copper oxide, manganese oxide, cobalt oxide, molybdenum oxide and mixtures thereof.

Said precursors can be natural raw materials originating from a quarry and/or chemical products originating from reactions of synthesis and/or pyrolysis. Said plurality of precursors is preferably selected in the group consisting of:
- precursors of the forming oxide SiO₂, preferably selected from among silica sand, quartz, sand, feldspathic sand, clay, sodium feldspar, potassium feldspar, quartzite, fossil meal, kaolin and combinations thereof;
- precursors of the forming oxide P₂O₅, preferably selected from among phosphoric anhydride, mixed phosphates of alkali and/or alkaline earth metals and combinations thereof;
- precursors of the forming oxide B₂O₃, preferably selected from among boric anhydride, boron salts, such as anhydrous borax, borax pentahydrate, borax decahydrate, and combinations thereof;
- precursors of the at least one microelement, preferably selected from among salts and/or oxides of the element sought, such as, for example, zinc oxide, iron oxide (II) and (III), iron (II) sulphate, iron (II) carbonate, hydrated copper carbonate, manganese dioxide, manganese (II) carbonate, cobalt oxide and molybdenum oxide.

Said precursors are used in an amount such as to allow obtaining the glass matrix as described above.

Said plurality of precursors preferably comprises precursors of the forming oxide SiO₂, in an amount comprised from 20 to 50% by weight, relative to the total weight of the mixture of precursors, precursors of the forming oxide P₂O₅ in an amount comprised from 10 to 30% by weight, relative to the total weight of the mixture of precursors and precursors of the forming oxide B₂O₃ in an amount comprised from 1 to 5% by weight, relative to the total weight of the mixture of precursors.

In the embodiment wherein the fertilizing composition of the invention further comprises at least one modifying oxide and/or at least one intermediary oxide and/or at least one stabilizing oxide, said mixture of precursors can further comprise precursors of the at least one modifying oxide of the glass matrix and/or precursors of the at least one intermediary oxide of the glass matrix, and/or precursors of the at least one stabilizing oxide of the glass matrix.

Said precursors can be natural raw materials originating from a quarry and/or chemical products originating from reactions of synthesis and/or pyrolysis.

Said mixture of precursors is preferably selected in the group consisting of:
- precursors of the at least one modifying oxide selected from among: sodium salt of boron, potassium salt of boron, sodium feldspar, potassium feldspar, sodium phosphate, sodium hydrogen phosphate, potassium phosphate, potassium hydrogen phosphate, sodium nitrate, potassium nitrate, sodium carbonate, potassium carbonate, lithium carbonate and combinations thereof;
- precursors of the at least one intermediary oxide selected from among: zirconium flour, rutile sand, aluminum oxide (α-alumina) and combinations thereof;
- precursors of the at least one stabilizing oxide selected from among: calcium carbonate, dolomite, barium carbonate, zinc oxide and combinations thereof.

The step of melting (b) the mixture of precursors is preferably carried out by introducing the mixture into a continuous or discontinuous open-flame and/or electric melting furnace.

As heating of the mixture in the furnace proceeds, chemical reactions between the various elements begin, which leads to the formation of a homogeneous glass matrix in a viscous liquid state.

The cooling step (c) is preferably carried out by percolating the molten mixture of step (b) from the melting furnace directly into water or making said molten mixture flow between two cooled metal cylinders.

The glass matrix is thus constituted by bonds between oxygen and metals which form due to the high temperature reaction of the mixture of precursors, in particular due to the reaction between the precursors of the at least three forming oxides and the precursors of the at least one microelement, i.e. due to the reaction of phosphorous, silica and boron with the metal cation of the at least one microelement or due to the reaction of the precursors of the at least three forming oxides, with the precursors of the at least one microelement, with the precursors of the at least one modifying oxide and/or with the precursors of the at least one intermediary oxide, and/or with the precursors of the at least one stabilizing oxide.

In a particularly preferred embodiment, the fertilizing composition of the invention, comprises a glass matrix as defined above and citric acid and/or at least one humic substance.

In particular, said glass matrix comprises:
- at least three forming oxides, wherein said at least three forming oxides are SiO₂, P₂O₅ and B₂O₃, and have a ratio by weight between SiO₂/P₂O₅ comprised from 1 to 5, preferably from 2.5 to 3.5 and a ratio by weight between SiO₂/B₂O₃ comprised from 15 to 25, preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, and
- at least one microelement selected from: iron, zinc, copper, manganese, cobalt, molybdenum and mixtures thereof.

As already indicated previously, said at least one microelement is present within said glass matrix in the form of an oxide.

In one embodiment, said glass matrix further comprises at least one modifying oxide and/or at least one intermediary oxide and/or at least one stabilizing oxide as described above.

Said citric acid and/or said at least one humic substance is preferably present in an amount comprised from 0.5 to 5 % by weight, preferably from 3 to 5 % by weight, relative to the total weight of the composition.

Said at least one humic substance is preferably selected in the group consisting of humins, humic acids, fulvic acids and combinations thereof, preferably depending on the pH of the soil used.

This embodiment is particularly advantageous in that the presence of citric acid and/or of at least one humic substance within the fertilizing composition makes it possible to improve the release characteristics of the nutrient elements contained therein and obtain fertilizing performances that are even superior to those of the fertilizing composition that does not comprise citric acid and/or at least one humic substance.

Without wishing to be bound to a specific theory, it has been demonstrated that herbaceous and/or arboreal crops are capable of modifying soil at the rhizosphere level and creating around their root system an environment that is as favourable as possible to their growth. In soil, crops - to a larger degree in situations of nutrient deficiency - activate mechanisms leading to the release of acidic exudates, i.e. a mixture of organic acids, such as oxalic acid, citric acid, malic acid and amino acids.

Such acidic conditions can also affect the supply of some nutrients compared to others, in the sense that the absorption of a nutrient by plant roots can be strongly influenced by the pH conditions and by the presence of compounds such as amino acids or organic oxyacids in the soil. It may thus occur that, precisely at the moment in which the plant needs a greater intake of nutrients, the release thereof by the fertilizing composition decreases and/or the plant's ability to assimilate them decreases, whereas these factors can increase in periods in which the crop has less need of nutrients.

As already mentioned, the fertilizing composition of the present invention comprises a glass matrix whose network, thanks to the particular ratio by weight between the at least three forming oxides, is not excessively stable and is therefore more easily attacked by the organic acids released by the roots of crops lacking nutrient elements. At the same time, the network of the composition according to the present invention is also not excessively destabilized, so that it can assure a release of nutrient substances "on demand" - when "demanded" by the crop - i.e. when the concentration of organic acids produced by the root system of the crop in the soil increases, without, however, exhausting its content of nutrient elements by releasing the latter in an excessively rapid or uncontrolled manner.

The presence of citric acid and/or of at least one humic substance within the composition according to the present invention appears to further favour the above-described mechanism since, as it already comprises within it the same (or similar) acids that are produced by the root system of the crops, it makes it possible to have an initial "boost" upon the opening of the glass network, which is therefore more easily attacked once the concentration of acids produced by the crops increases, thus assuring a veritable release "on demand" of an effective amount of meso- and micronutrients.

The subject matter of the present invention further relates to an aggregate comprising the fertilizing composition comprising a glass matrix and at least one thickening agent.

In one embodiment the aggregate according to the present invention comprises:
- the fertilizing composition comprising a glass matrix and citric acid and/or at least one humic substance, and
- at least one thickening agent.

Said citric acid and/or said at least one humic substance is preferably present in an amount comprised from 0.5 to 5 % by weight, preferably from 3 to 5 % by weight, relative to the total weight of the composition.

Said at least one humic substance is preferably selected in the group consisting of: humins, humic acids, fulvic acids and combinations thereof, preferably depending on the pH of the soil used.

In the case of both embodiments, the fertilizing composition comprising a glass matrix or the fertilizing composition comprising a glass matrix and citric acid and/or at least one humic substance are as previously described.

In particular, in the case of both embodiments said glass matrix is as described above, i.e. it comprises:
- at least three forming oxides, wherein said at least three forming oxides are SiO₂, P₂O₅ and B₂O₃, and have a ratio by weight between SiO₂/P₂O₅ comprised from 1 to 5, preferably from 2.5 to 3.5 and a ratio by weight between SiO₂/B₂O₃ comprised from 15 to 25, preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, and
- at least one microelement selected from: iron, zinc, copper, manganese, cobalt, molybdenum and mixtures thereof.

As already indicated previously, said at least one microelement is present within said glass matrix in the form of an oxide.

In one embodiment, the glass matrix further comprises at least one modifying oxide and/or at least one intermediary oxide and/or at least one stabilizing oxide as described above.

According to the present invention, the aggregate can have any form that is obtainable by adding the at least one thickening agent to the fertilizing composition according to the invention. The preferred form of the aggregate is the form of a spheroidal granule or a pellet.

Said thickening agent is preferably selected in the group consisting of: sodium silicate, carboxymethyl cellulose (CMC), biocompatible polymers of the PLA or PLGA type, polymers derived from plants such as maize, wheat or sugar beet, starches, bentonites and combinations thereof.

In a particularly preferred embodiment, said thickening agent is sodium silicate, as this material has a glasslike structure and is inert.

The aggregate comprising the fertilizing composition according to the present invention has numerous advantages, above all its easy handling. In fact, having a fertilizing composition in the form of an aggregate such as, for example, a granule or a pellet, allows a simpler use thereof, as there is no need for the use of personal protective equipment for the operator, otherwise obligatory in the case of a composition in the form of finely ground powder. Another advantage is linked to the decrease in powderiness, which leads to a greater ease of spreading the aggregate on the soil by means of agricultural machinery, for example by means of hoppers, as the fertilizing composition in the form of an aggregate does not give rise to phenomena of accumulation on the walls of the machines. Another advantage is related to the possibility of preparing and/or functionalizing said aggregate as desired and according to the different needs, for example by varying its form or adding additional ingredients into it.

For example, in one embodiment of the invention, the aggregate further comprises at least one microelement, said at least one microelement being identical to or different from the at least one microelement present within the glass matrix of the fertilizing composition.

Said at least one microelement is selected in the group consisting of: iron, zinc, copper, manganese, cobalt, molybdenum, boron, nickel, selenium, chloride, and mixtures thereof.

Said at least one microelement can be in the form of a salt, oxide or any other chemical compound comprising the element of interest.

Said at least one microelement thus represents a nutrient that is essential and/or useful to herbaceous and/or arboreal crops.

The present invention also relates to a method for fertilizing herbaceous and/or arboreal crops, comprising the steps of:
(i) providing a fertilizing composition comprising a glass matrix,
(ii) grinding the composition of step (i) until obtaining a composition in the form of flakes or a powder,
(iii) administering the composition of step (ii) to the crops.

Said glass matrix is as described above, i.e. it comprises:
- at least three forming oxides, wherein said at least three forming oxides are SiO₂, P₂O₅ and B₂O₃, and have a ratio by weight between SiO₂/P₂O₅ comprised from 1 to 5, preferably from 2.5 to 3.5, and a ratio by weight between SiO₂/B₂O₃ comprised from 15 to 25, preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, and
- at least one microelement selected from: iron, zinc, copper, manganese, cobalt, molybdenum and mixtures thereof.

As already indicated previously, said at least one microelement is present within said glass matrix in the form of an oxide.

In one embodiment, the glass matrix further comprises at least one modifying oxide and/or at least one intermediary oxide and/or at least one stabilizing oxide as described above.

Said composition in powder of step (ii) preferably has a particle size comprised from 20 to 200 µm, preferably from 50 to 100 µm.

Said composition in flakes of step (ii) consists of glass flakes with a particle size comprised from 1 to 5 mm, preferably from 3 to 5 mm.

In a preferred embodiment, the method for fertilizing herbaceous and/or arboreal crops according to the present invention envisages that, simultaneously with the grinding of step (ii), citric acid and/or at least one humic substance is added, until obtaining a fertilizing composition in the form of flakes or a powder. Said citric acid and/or said at least one humic substance is preferably present in an amount comprised from 0.5 to 5 % by weight, preferably from 3 to 5 % by weight, relative to the total weight of the composition.

Said at least one humic substance is preferably selected in the group consisting of: humins, humic acids, fulvic acids and combinations thereof, preferably depending on the pH of the soil used.

In one embodiment, the method according to the present invention comprises the steps of:
(i) providing a fertilizing composition comprising a glass matrix;
(ii) grinding the composition of step (i) until obtaining a composition in the form of flakes or a powder;
(ii.a) adding at least one thickening agent to the composition of step (ii);
(ii.b) subjecting the mixture of step (ii.a) to drying until obtaining an aggregate;
(iii) administering the aggregate of step (ii.b) to the crops.

In one embodiment of the invention, the thickening agent of step (ii.a) is added to composition of step (ii) having been dissolved beforehand in an aqueous solution.

Step (ii.a) preferably takes place within an appropriate aggregation system, more preferably within an appropriate pelletization system.

Said thickening agent is preferably selected in the group consisting of: sodium silicate, carboxymethyl cellulose (CMC), biocompatible polymers of the PLA or PLGA type, polymers derived from plants such as maize, wheat or sugar beet, starches, bentonites and combinations thereof.

Said drying is preferably carried out at a temperature of less than 100 °C, preferably comprised from 80 to 90 °C. Said drying is preferably carried out for a period of time comprised from 1 to 6 hours, more preferably comprised from 1 to 3 hours.

In one embodiment, the method according to the present invention envisages that in step (ii.a) of adding at least one thickening agent, there is further added at least one microelement identical to or different from the at least one microelement present within the glass matrix of the fertilizing composition.

Said at least one microelement is selected in the group consisting of: iron, zinc, copper, manganese, cobalt, molybdenum, boron, nickel, selenium, chloride, and mixtures thereof.

Said at least one microelement can be in the form of a salt, oxide or any other chemical compound comprising the element of interest.

Said at least one microelement thus represents at least one nutrient that is essential and/or useful to herbaceous and/or arboreal crops.

Said embodiment of the method according to the present invention, has the advantage of being able to "customize" the fertilizing composition of the present invention simultaneously with the step of adding the thickening agent (for example, therefore, simultaneously with a pelletization step) in order to obtain an aggregate according to the present invention. In fact, since the type of nutrients, in particular of micronutrients, can vary according to the different herbaceous and/or arboreal crops, it is important to be able to have a variable system with different elements depending on the target crop of reference, also starting from a same glass matrix.

In this case it is thus possible, from a same fertilizing composition comprising/having a certain starting glass matrix comprising at least three forming oxides SiO₂, P₂O₅ and B₂O₃ in a ratio by weight between SiO₂/P₂O₅ comprised from 1 to 5, preferably from 2.5 to 3.5, and a ratio by weight between SiO₂/B₂O₃ comprised from 15 to 25, preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, and at least one micronutrient selected from among iron, zinc, copper, manganese, cobalt, molybdenum and mixtures thereof, to modify, increase or vary the amount and type of nutrients present in order to be able to provide the crops with an even more customized fertilization without having to produce a glass matrix from scratch, with consequent huge savings of energies and resources.

The step (iii) of administering to the crops preferably takes place by distributing the composition of step (ii) or the aggregate of step (ii.b) in the soil around the root system of said crops.

Finally, the subject matter of the present invention further relates to the use of the fertilizing composition or the aggregate comprising the fertilizing composition according to the present invention to fertilize herbaceous and/or arboreal crops.

In one embodiment, the fertilizing composition or the aggregate comprising the fertilizing composition according to the present invention releases at least one nutrient in a controlled manner over a prolonged period of time and in a manner that can be modulated according to the nutritional needs of the herbaceous and/or arboreal crops.

Said nutrient can derive from the glass matrix and/or from at least one microelement further comprised in the aggregate.

In particular, the embodiment that envisages an aggregate comprising the fertilizing composition of the invention, at least one thickening agent, and further at least one microelement, said at least one microelement being identical to or different from the at least one microelement present within the glass matrix of the fertilizing composition, shows to be particularly advantageous for the purposes of the present invention since it enables the customization of the nutrients that will then be released by the aggregate to the preselected crops. This embodiment thus proves to be extremely versatile, since it enables one to supply different nutrients, which are calibrated and selected according to the needs of different crops, without having to reformulate the composition of the glass matrix from scratch but simply by varying the at least one microelement added into the aggregate.

Advantageously, the fertilizing composition or the aggregate comprising the fertilizing composition according to the present invention, thanks to the presence of a glass matrix with a ratio between forming oxides SiO₂, P₂O₅ and B₂O₃ in a ratio by weight between SiO₂/P₂O₅ comprised from 1 to 5, preferably from 2.5 to 3.5 and a ratio by weight between SiO₂/B₂O₃ comprised from 15 to 25, preferably from 16 to 25, more preferably from 17 to 25, more preferably from 18 to 25, more preferably from 19 to 25, even more preferably from 20 to 25, more preferably from 21 to 25, more preferably from 22 to 25, more preferably from 23 to 25, more preferably from 20 to 24, more preferably from 20 to 23, shows to possess characteristics of release of the nutrients (macro-, meso- and micronutrients) comprised within it that are optimal for the purposes of the present invention. As said previously, such characteristic weight ratios ensure that the glass network is not too stable and thus unlikely to be attacked by the organic acids produced by the roots of crops when they need nutrients, but nor is it too destabilized, which would lead on the one hand to an excessively rapid release over time, one that is difficult to control, in particular "on demand"by the crops, and on the other hand to intrinsic difficulties in the process of production of the glass matrix. Said herbaceous and/or arboreal crops are preferably selected in the group consisting of:
- herbaceous cereal crops such as, for example, oats, spelt, wheat, maize or corn, millet and foxtail millet, barley, quinoa, rice, rye, sorghum and triticale;
- herbaceous tuber and vegetable crops such as, for example, agretti, asparagus, batata, swiss chard, artichoke, cardoon, carrot, cauliflower and broccoli, cabbage, cucumber, chicory, watermelon, fennel, endive, kiwano, lettuce, aubergine, melon, potato, pepper, tomato, leek, turnip, broccoli rabe, radish, celery, spinach, lamb's lettuce, pumpkin and courgette and chayote;
- herbaceous forage crops such as, for example, tall oat grass, prairie grass, smooth brome grass, timothy grass, orchard grass, alfalfa, bulbous canarygrass, tall fescue, meadow fescue, red fescue, birdsfoot trefoil, hybrid ryegrass, rigid ryegrass, perennial ryegrass, Italian ryegrass, sainfoin, black medick, sulla and clover;
- herbaceous grain legumes such as, for example, chick pea, chickling vetch, kidney bean, cowpea, fava bean, field bean, horse bean, lentil, lupin and pea;
- industrial herbaceous crops such as, for example, amaranth, peanut, wormwood, sugar beet, hemp, giant cane, sugar cane, safflower, swede rape, cotton, sunflower, kenaf, flax, manioc, turnip rape, castor bean, sesame, soybean and tobacco;
- aromatic herbaceous crops such as, for example, garlic, wild garlic, laurel, dill, star anise, green anise, angelica archangelica, basil, borage, chamomile, Roman chamomile, cinnamon, caper, cardamom, lemon balm, onion, coriander, watercress, cumin, tarragon, curry plant, chives, costmary, fennel, sea fennel, wild fennel, juniper, hyssop, lavender, liquorice, marjoram, melissa, horse mint, peppermint, spearmint, lesser calamint, calamint, nutmeg, oregano, chilli pepper, perilla, parsley, butcher's broom, Chinese rhubarb, rhapontic rhubarb, horseradish, rosemary, wild rocket, rocket, rue, salad burnet, sage, santolina, summer savory, winter savory, shallot, celery, stevia, thyme, saffron and ginger;
- forest/ornamental tree and shrub crops and conifers such as, for example, fir, cedar, cypress, *Cryptomeria japonica, Douglasia,* juniper, *Gingko,* larch, *Metasequoia,* pine, sequoia, yew, *Thuja,* or broadleaves such as, for example, maple, acacia, holly, ailanthus, Kentucky coffee tree, chinaberry tree, tulip tree, Judas tree, European nettle tree, birch, hawthorn, hornbeam, chestnut, common ironwood, catalpa, Turkey oak, wild service tree, eucalyptus, beech, Italian oak, English oak, *Ficus,* phytolacca, Macedonia oak, ash, European spindle, mulberry, broom, horse chestnut, *Koelreuteria, Lagerstroemia,* holm oak, *Liquidambar, Maclura,* common laburnum, wild apple, mimosa, hazelnut, walnut, American walnut, silverberry, elm, alder, manna ash, bird cherry, empress tree, wild pear, poplar, plane tree, oak, black locust, sessile oak, downy oak, willow, goat willow, sophora, mountain ash, honey locust, cork oak, tamarisk and lime tree;
- fruit tree and shrub crops such as, for example, kiwi, apricot, pawpaw, azerole, carob, chestnut, cherry, strawberry tree, Cornelian cherry, quince, fig, mulberry, jujube, persimmon, almond, apple, pomegranate, cherry plum, medlar, hazelnut, walnut, olive, pear, peach, pistachio, service tree, plum and grape;
- citrus tree and shrub crops, such as, for example, bitter orange, sweet orange, trifoliate orange, bergamot, calamondin, citron, myrtle-leaved orange tree, kucle, kumquat, lime, key lime, lemon, mandarin, mandalate, mapo, Kaffir lime, pomelo, grapefruit, pompia and rangpur;
- tropical and subtropical fruit tree and shrub crops such as, for example, breadfruit, cashew, pineapple, sugar apple, avocado, babaco, banana, carambola, casimiroa, durian, feijoa, prickly pear, goji, guava, litchi, macadamia, mango, moringa, nashi pear, loquat, Brazil nut, noni, coconut palm, date palm, papaya, passion flower, pecan, pitahaya, rambutan, tamarillo and tamarind;
- small fruit tree and shrub crops such as, for example, strawberries, raspberries, bilberries, currants, blackberries and gooseberries-.

Another advantage of using the fertilizing composition or the aggregate comprising the fertilizing composition according to the present invention is connected to their versatility for the fertilization of different crops, in particular in relation to the release of boron.

The toxic action that boron exerts towards less demanding crops is in fact well known in the sector. For example, in fact, the use of a fertilizer rich in boron to a demanding crop such as sugar beets or carrots can provoke serious damage to the subsequent crop (such as, for example, a cereal). The fertilizing composition or the aggregate comprising the fertilizing composition according to the present invention comprises a decidedly reduced amount of boron compared to other glass matrices known in the sector (ratio by weight between SiO₂/B₂O₃ comprised from 500 to 2500). The fertilizing composition or the aggregate comprising the fertilizing composition according to the present invention can further comprise or be used in combination with a further ingredient and/or additive selected in the group consisting of: a dispersant, manure, an organic soil conditioner, a biostimulant and a combination thereof.

### Examples

### Example 1 - Fertilizing composition comprising/having a glass matrix

A fertilizing composition comprising/having a glass matrix according to the present invention was produced.

The raw materials used as precursors of the chemical compounds present within said glass matrix are shown in the table below (Table 1), which also indicates the respective amounts, expressed as percentage concentrations by weight, relative to the total weight of the mixture of precursors used in the production process.

**Table 1**

| Raw material | % by weight |
|---|---|
| Anhydrous borax | 1.74 |
| Zirconium silicate | 2.50 |
| Sodium feldspar | 27.24 |
| Pentasodium triphosphate | 13.14 |
| Sodium nitrate | 6.69 |
| Crystalline potassium nitrate | 1.51 |
| Calcium carbonate | 3.12 |
| Aluminium oxide (α-alumina) | 3.48 |
| Barium carbonate | 3.20 |
| Iron oxide (III) | 11.44 |
| Manganese dioxide | 24.90 |
| Rutile sand | 1.01 |

The raw materials were weighed in the proportions shown in the table and mixed together. The mixture of precursors thus obtained was sent to a melting system consisting of a natural gas-fired crucible made of refractory material, suitable for melting up to 30 Kg of material at a time. The temperature was increased to about 1400 °C and maintained for several hours, i.e. until obtaining a homogeneous molten mass that was sufficiently fluid to be percolated from a nozzle, directly into water. The cooled mixture appears in a solid-glassy and granular form, with grains and flakes of an irregular size and not uniformly distributed.

For the purposes of the subsequent experiments, the glass matrix thus obtained, i.e. the fertilizing composition according to the present invention was designated as "FTZ001-S" (native fertilizing composition), and has the chemical composition shown below in Table 2. The relative amount of the different chemical compounds (i.e. oxides) present within the glass matrix are expressed in percentage concentrations by weight, relative to the total weight of the glass matrix.

**Table2**

| Oxide | % by weight |
|---|---|
| SiO₂ | 26.21 |
| Al₂O₃ | 9.81 |
| Na₂O | 11.93 |
| K₂O | 1.53 |
| CaO | 2.94 |
| MgO | 0.24 |
| BaO | 4.05 |
| Fe₂O₃ | 12.56 |
| TiO₂ | 1.42 |
| ZrO₂ | 1.71 |
| ZnO | 0.04 |
| P₂O₅ | 8.68 |
| MnO₂ | 17.21 |
| Sb₂O₃ | 0.13 |
| Co₂O₃ | 0.09 |
| CuO | 0.16 |
| B₂O₃ | 1.18 |

### Example 2 - Fertilizing composition in powder comprising/having a glass matrix

The fertilizing composition obtained as per Example 1 was subjected to grinding using high-pressure grinding rollers by means of a system known in the sector as "high-pressure roller mill" until obtaining a powder with a particle size, determined by means of a sieve, equal to 200 µm. For the purposes of the subsequent experiments, the fertilizing composition according to the present invention in powder form was designated as "FTZ001-M" ground fertilizing composition.

### Example 2.1 - Fertilizing composition in powder comprising/having a glass matrix and further comprising citric acid

The fertilizing composition obtained as per Example 1 was subjected to grinding (as described in Example 2) and simultaneous mixing with citric acid in an amount of 2 % by weight relative to the weight of the ground fertilizing composition.

For the purposes of the subsequent experiments, the fertilizing composition according to the present invention in powder form and further comprising citric acid was designated as "FTZ001-MC" (ground fertilizing composition comprising citric acid).

### Example 3 - Fertilizing composition in pellets comprising/having a glass matrix

The fertilizing composition in powder obtained as per Example 2 was subsequently subjected to a pelletization step in order to form an aggregate according to the present invention. Said step was conducted by means of pelletization plates that provide for the continuous supply of the fertilizing composition in powder with the simultaneous addition of the thickener CMC in an amount of 0.15% by weight relative to the weight of the incoming fertilizing composition in powder. The CMC is dissolved in a 0.5% aqueous solution and the latter is fed to the powder on a rotary plate. The pellets thus obtained are dried at a temperature of 90°C for 2 h.

### Example 3.1 - Fertilizing composition in pellets comprising/having a glass matrix and further comprising citric acid

The fertilizing composition in powder obtained as per Example 2.1 was subjected to a pelletization step (as described in Example 3), thus obtaining an aggregate (pellet) comprising the fertilizing composition comprising/having a glass matrix and further comprising citric acid according to the present invention.

For the purposes of the subsequent experiments, the fertilizing composition in pellet form and further comprising citric acid was designated as "FTZ001-PC" (pelletized fertilizing composition comprising citric acid).

### Example 3.2 - Fertilizing composition in pellets comprising/having a glass matrix and further comprising citric acid and at least one further micronutrient

The fertilizing composition in powder obtained as per Example 2.1 was subjected to a pelletization step (as described in Example 3) and simultaneous mixing with various additional microelements.

Table 3 shows various fertilizing compositions in pellets comprising citric acid and further micronutrients in addition to those already present in the glass matrices of the fertilizing compositions themselves.

The relative amounts of the different micronutrients (i.e. oxides) added during the pelletization step are expressed in percentage concentrations by weight, relative to the total weight of the fertilizing composition.

**Table 3**

| Fertilizing composition in pellets | Microelement (expressed as an oxide) | % by weight |
|---|---|---|
| "FTZ001-PC-1" | ZnO | 0.3 |
| "FTZ001-PC-2" | ZnO+CuO | 0.2+0.1 |
| "FTZ001-PC-3" | ZnO+MoO | 0.1+0.2 |
| "FTZ001-PC-4" | MoO+CuO | 0.2+0.1 |

### Example 4 - Rhizo release test

The three compositions with a glass matrix prepared as described above in Examples 1, 2 and 2.1 were subjected in parallel to an assessment of the release of the elements contained therein by means of a RHIZO-test, a method capable of simulating the absorption of plants in a soil.

The values obtained after 16 and 48 hours, expressed as ppm of oxides are shown in Figure 1a. Figure 1b shows the same results expressed as ppm of the element.

As may be observed by comparing the three compositions ("FTZ001-S, "FTZ001-M" and "FTZ001-MC"), there is an increase in the release of all the microelements (but Fe and Mn in particular) both when passing from a "rough" form to a more finely ground form (due probably to a larger available contact surface), and following the addition of citric acid. In particular, this improvement is due to the fact that the presence of citric acid provides a "boost" to the weakening of the glass structure of the matrix, which is subsequently and/or simultaneously induced also by the organic acids present in the soil and produced naturally by the root system of the crops, above all when they are lacking nutrient substances.

### Example 5 - Comparative experiment with the Rhizo release test

A fertilizing composition with a glass matrix was obtained by repeating the production and grinding steps and the addition of citric acid described in Examples 1, 2 and 2.1, but using percentage amounts of the various precursors and thus of the various chemical elements (in the form of oxides) present in the glass matrix as described in patent application WO2007132497, in order to compare the efficiency of the composition of the present invention with that of a prior art composition.

The fertilizing composition according to the prior art thus has the chemical composition shown below in Table 4. The relative amount of the different chemical compounds (i.e. oxides) present within the glass matrix are expressed in percentage concentrations by weight, relative to the total weight of the glass matrix.

**Table 4**

| Oxide | % by weight |
|---|---|
| SiO₂ | 6.88 |
| Al₂O₃ | 3.11 |
| Na₂O | n.d. |
| K₂O | 19.93 |
| CaO | 8.81 |
| MgO | 5.82 |
| BaO | 0.01 |
| Fe₂O₃ | 10.44 |
| TiO₂ | 0.05 |
| ZrO₂ | 0.03 |
| ZnO | 3.43 |
| P₂O₅ | 32.32 |
| MnO₂ | 4.92 |
| Sb₂O₃ | n.d. |
| Co₂O₃ | 1.07 |
| CuO | n.d. |
| B₂O₃ | 2.37 |
| F | 0.68 |

For the purposes of the subsequent experiments, the fertilizing composition according to the prior art obtained after cooling of the molten mixture as described in Example 1 was designated as "TLF73-S".

For the purposes of the subsequent experiments, the fertilizing composition according to the prior art obtained after grinding as described in Example 2 was designated as "TLF73-M".

For the purposes of the subsequent experiments, the fertilizing composition according to the prior art obtained after grinding and the simultaneous addition of citric acid as described in Example 2.1 was designated as "TLF73-MC".

The three compositions with a glass matrix according to the prior art were subjected in parallel to an assessment of the release of the elements contained therein by means of a RHIZO-test.

The values obtained after 16 and 48 hours, expressed as ppm of oxides, are shown in Figure 2a. Figure 2b shows the same results expressed as ppm of the element.

As may be deduced by comparing Figures 1 and 2, the fertilizing composition of the present invention shows to be superior, in terms of the release of microelements, in all three forms (i.e. composition as such, composition finely ground and composition finely ground and supplemented with citric acid). This demonstrates that the ratio between the various oxides present within the glass matrix substantially conditions the properties in terms of the release of nutrients by the fertilizing composition. It is further possible to note that the particular ratio between SiO₂/P₂O₅ and SiO₂/B₂O₃ of the glass matrix of the fertilizing composition according to the present invention, which results in a glass matrix mainly based on SiO₂, allows a greater release of nutrients (in particular, of micronutrients). A different glass matrix, such as the one of the prior art, i.e. a glass matrix mainly based on phosphorous and with different weight ratios between the forming oxides, does not allow an equally high and satisfactory release.

Without wishing to be bound to a specific theory, the Applicant believes that this is due precisely to the particular ratio between the oxides (SiO₂, P₂O₅ and B₂O₃) forming the glass network of the glass matrix, which make it possible to obtain a glass structure that is stable enough to be able to be produced with traditional glassmaking techniques but at the same time has a matrix sensitive to the attack of the weak organic acids exuded by the roots of plants in soils, so that the network formed is more efficiently attacked compared to a more stable network, such as those of the prior art.

## Claims

1. A fertilizing composition comprising a glass matrix, said glass matrix comprising at least three forming oxides, wherein said at least three forming oxides are SiO₂, P₂O₅ and B₂O₃, and have a ratio by weight between SiO₂/P₂O₅ comprised from 1 to 5 and a ratio by weight between SiO₂/B₂O₃ comprised from 15 to 25, wherein said glass matrix comprises at least one microelement selected from among: iron, zinc, copper, manganese, cobalt, molybdenum and mixtures thereof, said at least one microelement being present within said glass matrix in oxide form.

2. The fertilizing composition according to claim 1, wherein the ratio by weight between SiO₂/P₂O₅ is comprised from 2.5 to 3.5 and the ratio by weight between SiO₂/B₂O₃ is comprised from 15 to 25, preferably from 20 to 25, more preferably from 20 to 23.

3. The fertilizing composition according to claim 1 or 2, wherein SiO₂ is present in the glass matrix in an amount comprised from 10 to 30% by weight, preferably from 23 to 27% by weight, relative to the total weight of the glass matrix; and/or wherein P₂O₅ is present in the glass matrix in an amount comprised from 5 to 20% by weight, preferably from 7 to 10% by weight, relative to the total weight of the glass matrix; and/or wherein B₂O₃ is present in the glass matrix in an amount comprised from 0.5 to 5% by weight, preferably from 0.9 to 1.3% by weight relative to the total weight of the glass matrix.

4. The fertilizing composition according to any one of the preceding claims, wherein said at least one microelement is present in the glass matrix in an amount greater than 1% by weight, preferably comprised from 10 to 40% by weight, even more preferably from 10 to 30% by weight, relative to the total weight of the glass matrix.

5. The fertilizing composition according to any one of the preceding claims, wherein said glass matrix further comprises at least one modifying oxide selected from among Na₂O, K₂O, Li₂O and combinations thereof, said at least one modifying oxide preferably being present in the glass matrix in an amount comprised from 0.5 to 40% by weight, preferably from 10 to 30% by weight, relative to the total weight of the glass matrix; and/or wherein said glass matrix further comprises at least one intermediary oxide selected from among Al₂O₃, TiO₂, ZrO₂ and combinations thereof, said at least one intermediary oxide preferably being present in the glass matrix in an amount comprised from 5 to 20% by weight, preferably from 10 to 15% by weight, relative to the total weight of the glass matrix; and/or wherein said glass matrix further comprises at least one stabilizing oxide selected from among BaO, CaO, MgO, TiO₂, ZrO₂ and ZnO and combinations thereof, preferably said at least one stabilizing oxide being present in the glass matrix in an amount comprised from 1 to 20% by weight, preferably from 10 to 20% by weight, relative to the total weight of the glass matrix.

6. The fertilizing composition according to any one of the preceding claims, further comprising citric acid and/or at least one humic substance, preferably said at least one humic substance being selected from the group consisting of: humin, humic acids, fulvic acids and combinations thereof, preferably according to the pH of the soil of use; wherein said citric acid and/or said at least one humic substance is preferably present in an amount comprised from 0.5 to 5% by weight, more preferably from 3 to 5% by weight, relative to the total weight of the composition.

7. An aggregate comprising the fertilizing composition according to any one of the preceding claims and at least one thickening agent, preferably selected from the group consisting of: sodium silicate, carboxymethyl cellulose (CMC), biocompatible polymers of the PLA, PLGA type, polymers derived from plants such as maize, wheat or sugar beet, starches, bentonites and combinations thereof.

8. The aggregate according to claim 7, further comprising at least one microelement, said at least one microelement being identical to or different from the at least one microelement present within the glass matrix of the fertilizing composition according to any one of claims 1 to 6.

9. A method for fertilizing herbaceous and/or arboreal crops, comprising the steps of:
(i) providing a fertilizing composition comprising a glass matrix according to any one of claims 1 to 5;
(ii) grinding the composition of step (i) until obtaining a composition in the form of flakes or a powder, preferably wherein said flakes are glass flakes with a particle size comprised from 1 to 5 mm, more preferably from 3 to 5 mm or, preferably, wherein said powder has a particle size comprised from 20 to 200 µm, preferably from 50 to 100 µm;
(iii) administering the composition of step (ii) to the crops.

10. The method according to claim 9, wherein, simultaneously with the grinding of step (ii), citric acid and/or at least one humic substance is added, until obtaining a fertilizing composition according to claim 6 in the form of flakes or a powder.

11. The method according to claim 9 or 10, further comprising a step (ii.a) of adding at least one thickening agent to the composition in the form of flakes or a powder obtained in step (ii) and a step (ii.b) of subjecting the mixture of step (ii.a) to drying, preferably at a temperature of less than 100 °C and for a period of time comprised from 1 to 6 hours, until obtaining an aggregate according to claim 7, said aggregate comprising the composition of step (ii).

12. The method according to claim 11, wherein in the step (ii.a) of adding at least one thickening agent, at least one microelement is further added until obtaining an aggregate according to claim 8.

13. The method according to claim 11 or 12, wherein step (iii) is a step of administering the aggregate of step (ii.b) to the crops.

14. The method according to any one of claims 9 to 13, wherein the step (iii) of administering to the crops takes place by distribution of the composition of step (ii) or of the aggregate of step (ii.b) in the soil around the root structure of said crops.

15. A use of the fertilizing composition according to any one of claims 1 to 6 or of the aggregate according to claim 7 or 8 to fertilize herbaceous and/or arboreal crops, preferably wherein said herbaceous and/or arboreal crops are selected from the group consisting of: herbaceous cereal crops, herbaceous tuber and vegetable crops, herbaceous forage crops, herbaceous grain legume crops, industrial herbaceous crops such as, for example, peanuts, sugar beet, hemp, sugar cane, cotton, sunflower, flax, soybean and tobacco, herbaceous aromatic crops such as, for example, saffron and ginger, forest/ornamental coniferous and broadleaf tree and shrub crops, fruit tree and shrub crops such as, for example, apricots, chestnuts, cherries, almonds, apples, pomegranates, medlars, hazelnuts, walnuts, olives, pears, peaches, pistachios, plums and grapes, citrus tree and shrub crops, such as, for example, oranges, limes, lemons, mandarins and grapefruits, tropical and subtropical fruit tree and shrub crops, small fruit tree and shrub crops, such as, for example, strawberries, raspberries, bilberries, currants and gooseberries.

## Patentansprüche

1. Düngemittelzusammensetzung, mit einer Glasmatrix, wobei die Glasmatrix mindestens drei bildende Oxide umfasst, wobei die mindestens drei bildenden Oxide SiO₂, P₂O₅ und B₂O₃ sind und ein Gewichtsverhältnis zwischen SiO₂/P₂O₅ von 1 bis 5 und ein Gewichtsverhältnis zwischen SiO₂/B₂O₃ von 15 bis 25 aufweisen, wobei die Glasmatrix mindestens ein Mikroelement umfasst, ausgewählt aus: Eisen, Zink, Kupfer, Mangan, Kobalt, Molybdän und Mischungen davon, wobei das mindestens eine Mikroelement in der Glasmatrix in Oxidform vorliegt.

2. Düngemittelzusammensetzung nach Anspruch 1, wobei das Gewichtsverhältnis zwischen SiO₂/P₂O₅ von 2,5 bis 3,5 enthalten ist und das Gewichtsverhältnis zwischen SiO₂/B₂O₃ von 15 bis 25, vorzugsweise von 20 bis 25, bevorzugter von 20 bis 23 enthalten ist.

3. Düngemittelzusammensetzung nach Anspruch 1 oder 2, wobei SiO₂ in einer Menge von 10 bis 30 Gew.- %, vorzugsweise von 23 bis 27 Gew.- %, bezogen auf das Gesamtgewicht der Glasmatrix, in der Glasmatrix vorhanden ist; und/oder wobei P₂O₅ in einer Menge von 5 bis 20 Gew.- %, vorzugsweise von 7 bis 10 Gew.- %, bezogen auf das Gesamtgewicht der Glasmatrix, in der Glasmatrix vorhanden ist; und/oder wobei B₂O₃ in einer Menge von 0,5 bis 5 Gew.- %, vorzugsweise von 0,9 bis 1,3 Gew.- %, bezogen auf das Gesamtgewicht der Glasmatrix, in der Glasmatrix vorhanden ist.

4. Düngemittelzusammensetzung nach einem der vorhergehenden Ansprüche, wobei das mindestens eine Mikroelement in der Glasmatrix in einer Menge von mehr als 1 Gew.- %, vorzugsweise von 10 bis 40 Gew.- %, noch bevorzugter von 10 bis 30 Gew.- %, bezogen auf das Gesamtgewicht der Glasmatrix, vorhanden ist.

5. Düngemittelzusammensetzung nach einem der vorhergehenden Ansprüche, wobei die Glasmatrix ferner mindestens ein modifizierendes Oxid umfasst, das aus Na₂O, K₂O, Li₂O und Kombinationen davon ausgewählt ist, wobei das mindestens eine modifizierende Oxid vorzugsweise in einer Menge von 0,5 bis 40 Gew.- %, vorzugsweise von 10 bis 30 Gew.- %, bezogen auf das Gesamtgewicht der Glasmatrix, in der Glasmatrix vorhanden ist; und/oder wobei die Glasmatrix ferner mindestens ein Zwischenoxid umfasst, das aus Al₂O₃, TiO₂, ZrO₂ und Kombinationen davon ausgewählt ist, wobei das mindestens eine Zwischenoxid vorzugsweise in einer Menge von 5 bis 20 Gew.- %, vorzugsweise von 10 bis 15 Gew.-%, bezogen auf das Gesamtgewicht der Glasmatrix, in der Glasmatrix vorhanden ist; und/oder wobei die Glasmatrix ferner mindestens ein stabilisierendes Oxid umfasst, das aus BaO, CaO, MgO, TiO₂, ZrO₂ und ZnO und Kombinationen davon ausgewählt ist, wobei vorzugsweise das mindestens eine stabilisierende Oxid in der Glasmatrix in einer Menge von 1 bis 20 Gew.- %, vorzugsweise von 10 bis 20 Gew.- %, bezogen auf das Gesamtgewicht der Glasmatrix, vorhanden ist.

6. Düngemittelzusammensetzung nach einem der vorhergehenden Ansprüche, ferner umfassend Zitronensäure und/oder mindestens eine Huminsubstanz, wobei vorzugsweise die mindestens eine Huminsubstanz aus der Gruppe ausgewählt ist, bestehend aus: Humin, Huminsäuren, Fulvinsäuren und Kombinationen davon, vorzugsweise gemäß dem pH-Wert des zu verwendenden Bodens; wobei die Zitronensäure und/oder die mindestens eine Huminsubstanz vorzugsweise in einer Menge von 0,5 bis 5 Gew.- %, bevorzugter von 3 bis 5 Gew.- %, bezogen auf das Gesamtgewicht der Zusammensetzung, vorhanden ist.

7. Aggregat, umfassend die Düngemittelzusammensetzung nach einem der vorhergehenden Ansprüche und mindestens ein Verdickungsmittel, vorzugsweise ausgewählt aus der Gruppe, bestehend aus: Natriumsilikat, Carboxymethylcellulose (CMC), biokompatiblen Polymeren des PLA-, PLGA-Typs, Polymeren, die von Pflanzen wie Mais, Weizen oder Zuckerrüben abgeleitet sind, Stärken, Bentoniten und Kombinationen davon.

8. Aggregat nach Anspruch 7, ferner umfassend mindestens ein Mikroelement, wobei das mindestens eine Mikroelement identisch mit oder verschieden von dem mindestens einen Mikroelement ist, das in der Glasmatrix der Düngemittelzusammensetzung nach einem der Ansprüche 1 bis 6 vorhanden ist.

9. Verfahren zum Düngen von krautigen und/oder baumartigen Kulturen, umfassend die Schritte:
(i) Bereitstellen einer Düngemittelzusammensetzung, mit einer Glasmatrix nach einem der Ansprüche 1 bis 5;
(ii) Mahlen der Zusammensetzung aus Schritt (i), bis eine Zusammensetzung in Form von Flocken oder eines Pulvers erhalten wird, wobei die Flocken vorzugsweise Glasflocken mit einer Partikelgröße von 1 bis 5 mm, bevorzugter von 3 bis 5 mm sind, oder wobei das Pulver vorzugsweise eine Partikelgröße von 20 bis 200 µm, vorzugsweise von 50 bis 100 µm, aufweist;
(iii) Verabreichen der Zusammensetzung von Schritt (ii) an die Kulturen.

10. Verfahren nach Anspruch 9, wobei gleichzeitig mit dem Mahlen von Schritt (ii) Zitronensäure und/oder mindestens eine Huminsubstanz zugegeben wird, bis eine Düngemittelzusammensetzung nach Anspruch 6 in Form von Flocken oder eines Pulvers erhalten wird.

11. Verfahren nach Anspruch 9 oder 10, ferner umfassend einen Schritt (ii.a) zum Zugeben mindestens eines Verdickungsmittels zu der Zusammensetzung in Form von Flocken oder eines in Schritt (ii) erhaltenen Pulvers und einen Schritt (ii.b) zum Unterziehen der Mischung aus Schritt (ii.a) dem Trocknen, vorzugsweise bei einer Temperatur von weniger als 100 °C und für einen Zeitraum von 1 bis 6 Stunden, bis ein Aggregat nach Anspruch 7 erhalten wird, wobei das Aggregat die Zusammensetzung aus Schritt (ii) umfasst.

12. Verfahren nach Anspruch 11, wobei in Schritt (ii.a) zum Zugeben mindestens eines Verdickungsmittels ferner mindestens ein Mikroelement zugegeben wird, bis ein Aggregat nach Anspruch 8 erhalten wird.

13. Verfahren nach Anspruch 11 oder 12, wobei Schritt (iii) ein Schritt zum Verabreichen des Aggregats aus Schritt (ii.b) an die Kulturen ist.

14. Verfahren nach einem der Ansprüche 9 bis 13, wobei der Schritt (iii) der Verabreichung an die Kulturen durch Verteilung der Zusammensetzung aus Schritt (ii) oder des Aggregats aus Schritt (ii.b) im Boden um die Wurzelstruktur der Kulturen herum erfolgt.

15. Verwendung der Düngemittelzusammensetzung nach einem der Ansprüche 1 bis 6 oder des Aggregats nach Anspruch 7 oder 8 zur Düngung von krautigen und/oder baumartigen Kulturen, wobei die krautigen und/oder baumartigen Kulturen vorzugsweise aus der Gruppe ausgewählt sind, bestehend aus: krautigen Getreidekulturen, krautigen Knollen- und Gemüsekulturen, krautigen Futterkulturen, krautigen Körnerleguminosen, industriellen krautigen Kulturen wie beispielsweise Erdnüsse, Zuckerrüben, Hanf, Zuckerrohr, Baumwolle, Sonnenblume, Flachs, Sojabohne und Tabak, krautigen aromatischen Kulturen wie beispielsweise Safran und Ingwer, Wald-/Ziernadel- und Laubbaum- und Strauchkulturen, Obstbaum- und Strauchkulturen wie beispielsweise Aprikosen, Kastanien, Kirschen, Mandeln, Äpfeln, Granatäpfeln, Mispeln, Haselnüssen, Walnüssen, Oliven, Birnen, Pfirsichen, Pistazien, Pflaumen und Trauben, Zitrusbaum- und Strauchkulturen wie beispielsweise Orangen, Limonen, Zitronen, Mandarinen und Trauben, tropischen und subtropischen Fruchtbaum- und Strauchkulturen, kleinen Obst- und Strauchkulturen wie beispielsweise Erdbeeren, Himbeeren, Heidelbeeren, Johannisbeeren, Stachelbeeren.

## Revendications

1. Composition fertilisante comprenant une matrice de verre, ladite matrice de verre comprenant au moins trois oxydes formateurs, dans laquelle lesdits au moins trois oxydes formateurs sont SiO₂, P₂O₅ et B₂O₃, et ont un rapport en poids entre SiO₂/P₂O₅ compris entre 1 et 5 et un rapport en poids entre SiO₂/B₂O₃ compris entre 15 et 25, dans laquelle ladite matrice de verre comprend au moins un micro-élément choisi parmi : le fer, le zinc, le cuivre, le manganèse, le cobalt, le molybdène et leurs mélanges, ledit au moins un micro-élément étant présent dans ladite matrice de verre sous forme d'oxyde.

2. Composition fertilisante selon la revendication 1, dans laquelle le rapport en poids entre SiO₂/P₂O₅ est compris entre 2,5 et 3,5 et le rapport en poids entre SiO₂/B₂O₃ est compris entre 15 et 25, de préférence entre 20 et 25, plus préférablement entre 20 et 23.

3. Composition fertilisante selon la revendication 1 ou 2, dans laquelle SiO₂ est présent dans la matrice de verre dans une quantité comprise entre 10 et 30 % en poids, de préférence entre 23 et 27 % en poids, par rapport au poids total de la matrice de verre ; et/ou dans laquelle P₂O₅ est présent dans la matrice de verre dans une quantité comprise entre 5 et 20 % en poids, de préférence entre 7 et 10 % en poids, par rapport au poids total de la matrice de verre ; et/ou dans laquelle B₂O₃ est présent dans la matrice de verre dans une quantité comprise entre 0,5 et 5 % en poids, de préférence entre 0,9 et 1,3 % en poids par rapport au poids total de la matrice de verre.

4. Composition fertilisante selon l'une quelconque des revendications précédentes, dans laquelle ledit au moins un micro-élément est présent dans la matrice de verre dans une quantité supérieure à 1 % en poids, de préférence comprise entre 10 et 40 % en poids, de préférence encore entre 10 et 30 % en poids, par rapport au poids total de la matrice de verre.

5. Composition fertilisante selon l'une quelconque des revendications précédentes, dans laquelle ladite matrice de verre comprend de plus au moins un oxyde modificateur choisi parmi Na₂O, K₂O, Li₂O et leurs combinaisons, ledit au moins un oxyde modificateur étant de préférence présent dans la matrice de verre dans une quantité comprise entre 0,5 et 40 % en poids, de préférence de 10 à 30 % en poids, par rapport au poids total de la matrice de verre ; et/ou dans laquelle ladite matrice de verre comprend de plus au moins un oxyde intermédiaire choisi parmi Al₂O₃, TiO₂, ZrO₂ et des combinaisons de ceux-ci, ledit au moins un oxyde intermédiaire étant de préférence présent dans la matrice de verre dans une quantité comprise entre 5 et 20 % en poids, de préférence de 10 à 15 % en poids, par rapport au poids total de la matrice de verre ; et/ou dans lequel ladite matrice de verre comprend de plus au moins un oxyde stabilisant choisi parmi BaO, CaO, MgO, TiO₂, ZrO₂ et ZnO et leurs combinaisons, de préférence ledit au moins un oxyde stabilisant étant présent dans la matrice de verre dans une quantité comprise entre 1 et 20 % en poids, de préférence entre 10 et 20 % en poids, par rapport au poids total de la matrice de verre.

6. Composition fertilisante selon l'une quelconque des revendications précédentes, comprenant de plus de l'acide citrique et/ou au moins une substance humique, de préférence ladite au moins une substance humique étant choisie dans le groupe constitué par : l'humine, les acides humiques, les acides fulviques et leurs combinaisons, de préférence en fonction du pH du sol utilisé ; dans laquelle ledit acide citrique et/ou ladite au moins une substance humique est de préférence présent dans une quantité comprise entre 0,5 et 5 % en poids, plus préférablement entre 3 et 5 % en poids, par rapport au poids total de la composition.

7. Agrégat comprenant la composition fertilisante selon l'une quelconque des revendications précédentes et au moins un agent épaississant, de préférence choisi dans le groupe constitué par : le silicate de sodium, la carboxyméthylcellulose (CMC), les polymères biocompatibles de type PLA, PLGA, les polymères dérivés de végétaux tels que le maïs, le blé ou la betterave sucrière, les amidons, les bentonites et leurs combinaisons.

8. Agrégat selon la revendication 7, comprenant de plus au moins un micro-élément, ledit au moins un micro-élément étant identique ou différent de l'au moins un micro-élément présent à l'intérieur de la matrice de verre de la composition fertilisante selon l'une quelconque des revendications 1 à 6.

9. Procédé de fertilisation de cultures herbacées et/ou arboricoles, comprenant les étapes de :
(i) fournir une composition fertilisante comprenant une matrice de verre selon l'une quelconque des revendications 1 à 5 ;
(ii) broyer la composition de l'étape (i) jusqu'à obtenir une composition sous forme de flocons ou d'une poudre, de préférence dans lequel lesdits flocons sont des flocons de verre dont la taille des particules est comprise entre 1 et 5 mm, plus préférablement entre 3 et 5 mm ou, de préférence, dans lequel ladite poudre possède une taille de particules comprise entre 20 et 200 um, de préférence entre 50 et 100 um ;
(iii) administrer la composition de l'étape (ii) aux cultures.

10. Procédé selon la revendication 9, dans lequel, simultanément au broyage de l'étape (ii), il est ajouté de l'acide citrique et/ou au moins une substance humique, jusqu'à obtenir une composition fertilisante selon la revendication 6 sous forme de flocons ou de poudre.

11. Procédé selon la revendication 9 ou 10, comprenant de plus une étape (ii.a) consistant à ajouter au moins un agent épaississant à la composition sous forme de flocons ou de poudre obtenue à l'étape (ii) et une étape (ii.b) consistant à soumettre le mélange de l'étape (ii.a) à un séchage, de préférence à une température inférieure à 100 °C et pendant une durée comprise entre 1 et 6 heures, jusqu'à obtenir un agrégat selon la revendication 7, ledit agrégat comprenant la composition de l'étape (ii).

12. Procédé selon la revendication 11, dans lequel, à l'étape (ii.a) consistant à ajouter au moins un agent épaississant, au moins un micro-élément est ajouté jusqu'à obtenir un agrégat selon la revendication 8.

13. Procédé selon la revendication 11 ou 12, dans lequel l'étape (iii) est une étape consistant à administrer l'agrégat de l'étape (ii.b) aux cultures.

14. Procédé selon l'une quelconque des revendications 9 à 13, dans lequel l'étape (iii) d'administration aux cultures s'effectue par distribution de la composition de l'étape (ii) ou de l'agrégat de l'étape (ii.b) dans le sol autour de la structure racinaire desdites cultures.

15. Utilisation de la composition fertilisante selon l'une quelconque des revendications 1 à 6 ou de l'agrégat selon la revendication 7 ou 8 pour fertiliser des cultures herbacées et/ou arboricoles, de préférence dans laquelle lesdites cultures herbacées et/ou arboricoles sont choisies dans le groupe constitué par : les cultures céréalières herbacées, les cultures de tubercules et de légumes herbacés, les cultures fourragères herbacées, les cultures de légumineuses à grains herbacées, les cultures herbacées industrielles telles que, par exemple, les arachides, la betterave à sucre, le chanvre, la canne à sucre, le coton, le tournesol, le lin, le soja et le tabac, les cultures aromatiques herbacées telles que, par exemple, le safran et le gingembre, les cultures forestières/ornementales de conifères et de feuillus et d'arbustes, les cultures d'arbres et d'arbustes fruitiers tels que, par exemple, les abricots, les châtaignes, les cerises, les amandes, les pommes, les grenades, les nèfles, les noisettes, les noix, les olives, les poires, les pêches, les pistaches, les prunes et le raisin, les cultures d'arbres et d'arbustes à agrumes, tels que, par exemple, les oranges, les limes, les citrons, les mandarines et les pamplemousses, les cultures d'arbres et d'arbustes fruitiers tropicaux et subtropicaux, les cultures d'arbres et d'arbustes à petits fruits, tels que, par exemple, les fraises, les framboises, les myrtilles, les groseilles à grappes et les groseilles à maquereau.
